# EUROPEAN PATENT SPECIFICATION

(11) **EP 4 342 561 B1**
(45) Date of publication and mention of the grant of the patent: **03.12.2025**
(21) Application number: 22196486.9
(22) Date of filing: 20.09.2022
(51) Int. Cl.: B01D 46/24, B01D 46/64

(54) **GAS FILTER SYSTEM**
GASFILTERSYSTEM
SYSTÈME DE FILTRATION DE GAZ

(43) Date of publication of application: 27.03.2024
(73) Proprietor: MANN+HUMMEL GmbH, 71636 Ludwigsburg (DE)
(72) Inventor: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71691 Freiberg (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Representative: Mann + Hummel Intellectual Property

(56) References cited:
- DE-A1- 102017 003 577
- DE-A1- 102018 215 603
- DE-A1- 3 908 828
- JP-A- 2014 040 790
- US-A1- 2007 241 045

## Description

### Technical field

The present invention refers to a gas filter system comprising
- an outer filter element having a first filter medium arranged between a first end cap and a second end cap;
- an inner filter element having a second filter medium arranged between a third end cap and a fourth end cap;

the first, second and third end caps being open,
the inner filter element being closed at the fourth end cap,
the first filter medium being arrangeable to surround the second filter medium.

### Background

Such a filter system is known from DE 10 2018 215 603 A1.

In some applications, it is required to filter a gas flow with two filter elements. Typically, the gas flows through a first filter element and then, the prefiltered gas flows through a second filter element. The filter elements can be arranged in a common housing. This kind of filter systems is for instance used to filter combustion air for large combustion engines, such as for trucks, construction vehicles or the like. Another application is the filtration of air for fuel cells.

DE 10 2018 215 603 A1 discloses a gas filter system with a first filter element which surrounds a second filter element. At a first axial end, open end caps of the two filter elements are associated with an outlet for clean air. At a second axial end, the first (outer) filter element has an open end cap and the second (inner) filter element has a closed end cap. The closed end cap of the inner filter element is arranged to close the opening in the end cap of the outer filter element at the second axial end.

JP 2014 040 790 A2 discloses an air cleaner that reduces the amount of oil that contaminates the area around the engine. The air cleaner has a filter housing that accommodates a filter, and the inside of the filter housing is divided into an inflow chamber and an outflow chamber by the filter. The air cleaner further has a blow-by gas inflow portion that opens into the inflow chamber and introduces blow-by gas into the inflow chamber, a fresh air inflow portion that opens into the inflow chamber and a blow-by gas outlet that opens into the outflow chamber and discharges blow-by gas and fresh air from the outflow chamber. The filter includes a filter member and a filter member that is arranged downstream of the filter member and has a higher lipophilicity than the filter member.

DE 10 2017 003 577 A1 discloses a device for treating fluids, in particular a filter device, comprising at least a first and a second tubular element, which together form an element assembly, wherein one element is received in the other element so as to form a flow space between the two elements in such a way that a first element in the direction of the inflow side of a fluid to be treated and a second element in the direction of the outflow side of the treated fluid in the element composite, and wherein both elements during the fluid treatment in succession from the direction of the incoming side coming to the outflow side, characterized in that, based on a common viewing direction, the first element facing the inflow side has at least in part a uniform or non-uniform contour and the second element facing the outflow side has at least in part a non-uniform or uniform contour.

US 2007/241045 A1 discloses a two-stage, tandem, replaceable filter cartridge assembly, which includes an outer filter cartridge having a cylindrical shape and defining an axial bore therein, and an inner filter cartridge, also having a cylindrical shape which is received within the axial bore of the outer filter cartridge. The inner filter cartridge may be collapsible so that it can be easily inserted inside the axial bore of the outer filter cartridge, and is expandable so that in normal applications, it rests up against the inner surface of the outer filter cartridge's core, if such is included, or filter medium. One or both of the filter media of the inner and outer cartridges may be formed from an antimicrobial material. In a second embodiment, each of the inner and outer filter cartridges has top and bottom end caps which respectively are structured to mate with one another to form seals therebetween to prevent or minimize the egress of water between the mating top and bottom end caps.

DE 39 08 828 A1 discloses a filter element for use in a solid filter having a star-shaped filter, of filter paper for example, and a filter pipe arranged inside the star-shaped filter. The filter pipe is intended to act as a safety layer in the event of damage to the outer star-shaped filter and also as a support to maintain the shape of the star filter.

It is an object of the invention to provide a gas filter system with improved sealing between two filter elements, which are adapted for joint use.

This is achieved by a gas filter system according to claim 1 and use of filter elements according to claim 11. Advantageous embodiments are given in the subclaims and the description.

### Disclosure of the invention

In accordance with the invention, a gas filter system is provided. The gas filter system comprises
- an outer filter element having a first filter medium arranged between a first end cap and a second end cap; and
- an inner filter element having a second filter medium arranged between a third end cap and a fourth end cap.

The first, second and third end caps are open. The first, second and third end caps generally have a central opening.

The inner filter element is closed at the fourth end cap. The fourth end cap may be a monolithic closed end cap. Alternatively, a closing means may be permanently affixed to the inner filter element for sealing of the fourth end cap.

The first filter medium is arrangeable to surround the second filter medium. The filter media may be hollow-cylindrical or conical, preferably with an essentially circular or oval cross section. The filter media each surround a longitudinal axis. In particular, the filter media may be arranged concentric to a common longitudinal axis. Indications of directions such as radial or axial refer to the longitudinal axis of the filter system. In principle, the first and third end caps are associated with a first axial end; the second and fourth end caps are associated with a second axial end. The end caps cover the filter media in axial direction and in a sectional view will typically have the same geometrical shape as the filter media, e.g. circular or ring-shaped.

During use of the gas filter system, a gas flow is typically first directed through the first filter medium of the outer filter element and then through the second filter medium of the inner filter element.

According to the invention, when the outer filter element is arranged around the inner filter element for use of the gas filter system, the first end cap of the outer filter element surrounds the third end cap of the second filter element, and the second end cap of the outer filter element surrounds the fourth end cap of the inner filter element. In other words, the first and third end caps are arranged on the same axial height along the longitudinal axis. Likewise, the second and fourth end caps are arranged on the same axial height along the longitudinal axis. In this mounted state, the first and third end caps are sealed against each other, preferably in the radial direction, and the second and fourth end caps are sealed against each other, preferably in the radial direction. By sealing of the first and third end caps against each other, an intermediate space between the first and second filter media is sealed at the first end. By sealing of the second and fourth end caps against each other, an intermediate space between the first and second filter media is sealed at the second end. Therefore, gas to be filtered must flow through the two filter media consecutively. The end caps being arranged on the same axial height must not necessarily mean that the filter bellows have the same height. For example, in case of a shorter inner filter element the third end cap may comprise an axial extension or collar for abutment against the first end cap of the outer filter element.

The first end cap of the outer filter element can have a first sealing section for sealing abutment against a housing, preferably in the radial direction. Alternatively or additionally, the first sealing section may provide axial sealing abutment against the housing. The first sealing section may be an integral part of the first end cap.

In general, sealing sections described within the context of this invention are softer than the counter-part against which they shall seal. In particular, a respective sealing section can be made from polyurethane, preferably polyurethane foam. The respective counter-part can be made from rigid plastic.

The first end cap of the outer filter element can have a second sealing section for sealing abutment against the third end cap of the inner filter element, preferably in the radial direction. The second sealing section may be an integral part of the first end cap. Preferably, the first end cap - with the first and/or second sealing section - is a monolithic foam part. If the first end cap has the (soft) second sealing section, the third end cap is generally made from a harder material such as rigid plastic and can be glued to the second filter medium.

Alternatively, the third end cap of the inner filter element can have a second sealing section for sealing abutment against the first end cap of the outer filter element, preferably in the radial direction. The second sealing section may be an integral part of the third end cap. In this case, the second end cap may be a, preferably monolithic, foam part. Then, the first end cap is generally made from a harder material such as rigid plastic and can be glued to the first filter medium.

The second end cap of the outer filter element can have a third sealing section for sealing abutment against the fourth end cap of the inner filter element, preferably in the radial direction. Preferably, the third end cap - with the third sealing section - is a monolithic foam part. If the second end cap has the (soft) third sealing section, the fourth end cap is generally made from a harder material such as rigid plastic and can be glued to the second filter medium.

Alternatively, the fourth end cap of the inner filter element can have a third sealing section for sealing abutment against the second end cap of the outer filter element, preferably in the radial direction. The third sealing section may be an integral part of the fourth end cap. In this case, the fourth end cap may be a, preferably monolithic, foam part. Then, the second end cap is generally made from a harder material such as rigid plastic and can be glued to the first filter medium.

End caps, which have at least one sealing section, can be made from polyurethane, in particular polyurethane foam. End caps, against which a sealing section abuts, can be made from rigid plastic. The plastic end caps can be glued to the respective filter medium.

The second end cap can have at least one support leg for axial support of the outer filter element against a housing. The support leg can be integrally made with the second end cap.

The gas filter system further comprises a housing, in which the inner and outer filter elements are arrangeable. In a mounted state, the filter elements are arranged inside the housing. Typically, the housing comprises a first housing part associated with the first end and a second housing part associated with the second end. An inlet may be formed at the first or second housing part. An outlet is preferably formed at the first housing part. The outlet may be in fluid communication with a clean side inside the inner filter element.

The inner filter element has an axial protrusion at the fourth end cap, which protrusion protrudes into the inner filter element. Preferably, the protrusion is integrally formed with the fourth end cap. Alternatively, the protrusion may constitute a closing means for the fourth end cap.

The housing has a central tube, which extends into the inner filter element at the third end cap in a mounted state of the filter system. The central tube provides guidance to the inner filter element and support to the second filter medium.

The central tube can be held at an axial collar of the housing. This is advantageous for manufacturing the filter housing. A snap fit may be provided between the collar and the central tube.

Preferably, the protrusion and the central tube overlap each other in the axial direction. Mutual guidance and support between the central tube and the inner filter element can be achieved in this way. This can also facilitate mounting of the filter system. In particular, the protrusion may engage into the central tube. In other words, the central tube can surround the protrusion radially outwardly.

The housing has a dome, which protrudes into the protrusion at the fourth end cap. The dome can provide guidance during mounting and in particular additional support to inner filter element during use of the filter system.

It may further be provided, that the dome and the central tube overlap each other in the axial direction. Undesired movement of the filter elements during operation can be effectively reduced with this design. Upon heavy vibration, the central tube can bear against the dome via the protrusion, which is arranged between the central tube and the dome.

If the first filter element and/or the second filter element have/has a rotational symmetric shape it may be advantageous to add a feature which enables installation in a defined position. The protrusion, the central tube and preferably also the dome may have a corresponding protrusion or indentation in the radial direction. In this way the inner filter element and preferably also the cover may be mounted in a defined rotational position. Likewise, the second end cap and the fourth end cap may have a protrusion or indentation in order to define the relative position of the inner and outer filter element in circumferential direction. Additionally or alternatively, the second end cap and an inner wall of the housing may have a corresponding protrusion and indentation.

The first or the second filter medium, in particular the second filter medium of the inner filter element, can have gas-adsorbing properties and preferably contains activated carbon. Typical harmful gases are SO₂, NOₓ and NH_{3.}

The first or the second filter medium, in particular the first filter medium of the outer filter element, can be made with cellulose.

The first and/or the second filter medium may be pleated.

The invention also relates to the use of an outer filter element and/or an inner filter element in a gas filter system according to the invention, as described above. The gas filter system may be used for cathode air filtration of a fuel cell in an electric vehicle.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a gas filter system according to the invention, the gas filter system comprising an outer filter element, an inner filter element and a housing, in a schematic sectional view;
- Fig. 2: shows the outer filter element of the gas filter system of Fig. 1, in a schematic sectional view;
- Fig. 3: shows the inner filter element of the gas filter system of Fig. 1, in a schematic sectional view;
- Fig. 4: shows a first end of the filter system of Fig. 1 in an enlarged view;
- Fig. 5: shows a second end of the filter system of Fig. 1 in an enlarged view.

### Detailed description

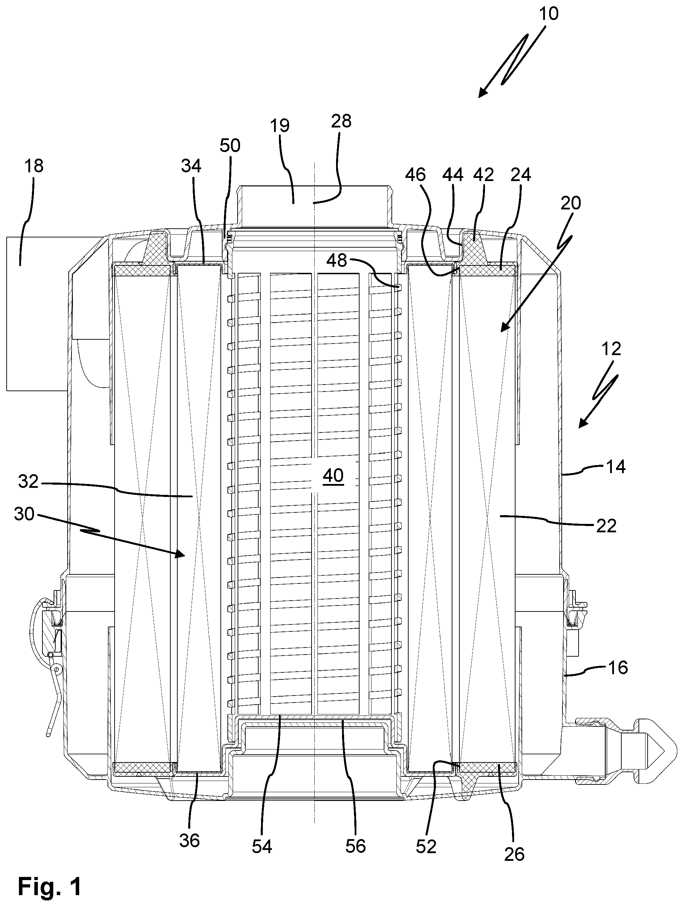

Figure 1 shows a gas filter system 10. The filter system 10 comprises a housing 12.

The housing has a first housing part **14** and a second housing part **16,** which are attachable to each other. An inlet **18** allows gas to enter the housing 12. Here, the inlet is formed at the first housing part 14. An outlet **19** for filtered gas is also formed at the first housing part **14.** The housing parts 14, 16 can be made from metal and/or rigid plastic.

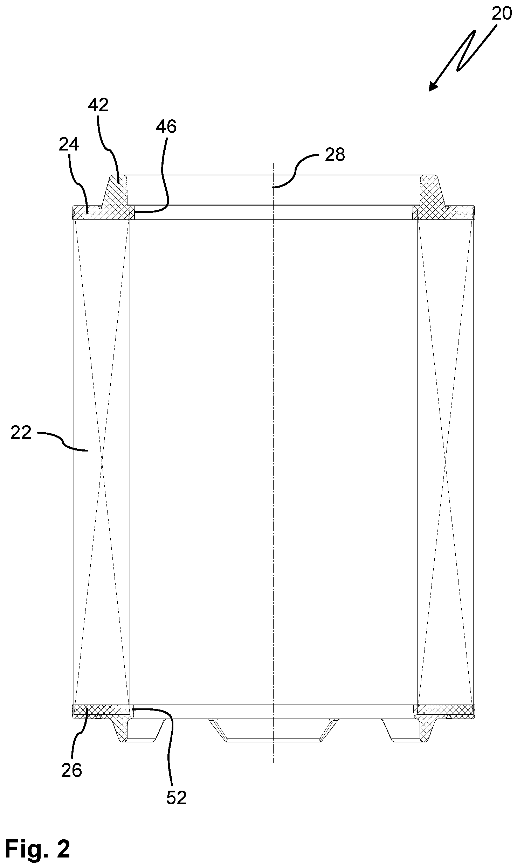

The filter system 10 further comprises an outer filter element **20,** see also **Figure 2****.** The outer filter element 20 comprises a first filter medium **22.** The first medium 22 is contained between a first end cap **24** and a second end cap **26.** The first filter medium 22 surrounds a longitudinal axis **28** in a ciruclar manner. The first filter medium 22 can be made from pleated cellulose paper.

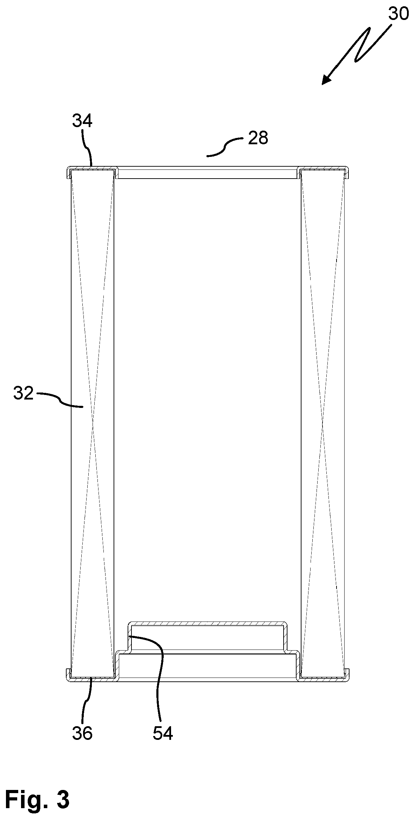

The filter system 10 further comprises an inner filter element **30,** see also **Figure 3****.** The inner filter element 30 comprises a second filter medium **32.** The second medium 32 is contained between a third end cap **34** and a fourth end cap **36.** The second filter medium 32 also surrounds the longitudinal axis 28 in a ciruclar manner. The second filter medium 32 can be pleated and can contain activated carbon in order to achieve gas-adsorbing properties.

The inner filter element 30 is arranged inside the outer filter element 20. Both filter elements 20, 30 are arranged inside the housing 12. Here, the first and second filter media 22, 32 are concentric to one another and to the longitudinal axis 28.

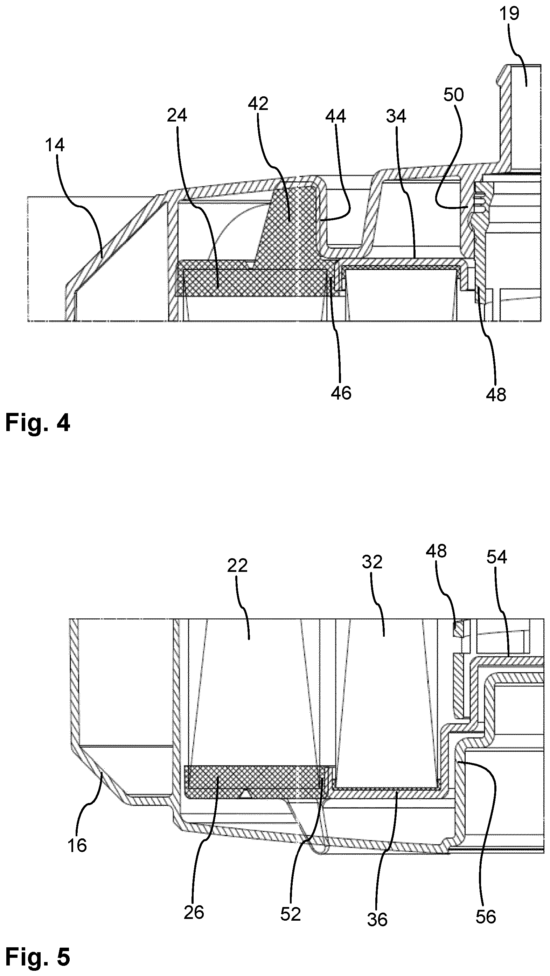

At a first end of the filter system 10, the first end cap 24 is arranged to surround the third end cap 34, see also **Figure 4****.** The first end cap 24 and the third end cap 34 each have a central opening, see also Figures 2 and 3, respectively. The outlet 19 is in fluid communication with a clean side **40** within the inner filter element 30, cf. Figure 1.

The first end cap 24 of the outer filter element 20 is axially and/or radially sealed against the housing 12. A first sealing section **42** axially protrudes form the first end cap 24. The first sealing section 42 abuts the first housing part 14 in the axial and in the radial direction. The first housing part 14 has a circumferential rib **44,** against which the first sealing section 42 of the first end cap 24 rests in the radial direction.

The first end cap 24 and the third end cap 34 are sealed against each other. In the depicted embodiment, a radial sealing is established. The first end cap 24 has a second sealing section **46.** The second sealing section 46 sealingly abuts the third end cap 34 in the radial direction.

In the depicted embodiment, the first end cap 24 with the first sealing section 42 and the second sealing section 46 is integrally made from polyurethane foam. In other words, the first end cap 24 with its sealing sections 42, 46 is a monolitic part. The third end cap 34 is made from rigid plastic and glued to the second filter medium 32.

A central tube **48** of the housing 12 is held at an axial collar **50,** cf. Figures 1 and 4. The collar 50 axially protrudes into the housing 12 at the outlet 19. The central tube 48 extends through the opening of the third end cap 34 towards the fourth end cap 36. The central tube 48 can be made from rigid plastic.

At a second end of the filter system 10, the second end cap 26 is arranged to surround the fourth end cap 36, see also **Figure 5****.** The second end cap 26 has a central opening, see also Figure 2. The fourth end cap 36 is closed, see also Figure 3. In the depicted embodiment, the fourth end cap 36 is a monolitic closed end cap. The fourth end cap 36 can be made from rigid plastic and is preferably glued to the second filter medium 32.

The second end cap 26 and the fourth end cap 36 are sealed against each other. In the depicted embodiment, a radial sealing is established. The second end cap 26 has a third sealing section **52.** The third sealing section 52 sealingly abuts the fourth end cap 36 in the radial direction. The second end cap 26 with the third sealing section 52 can be integrally made from polyurethane foam. In other words, the second end cap 26 with its sealing section 52 is a monolitic part.

In its central area (radially within the second filter medium 32), the fourth end cap 36 forms a protrusion **54,** see Figures 1, 3 and 5. The protrusion 54 extends into the inner filter element 30 in the axial direction towards the third end cap 34.

The central tube 48 of the housing 12 and the protrusion 54 of the inner filter element 30 overlap each other along the longitudinal axis 28. The protrusion 54 may be tapered in order to extend into the central tube 48.

The housing 12 has a dome **56.** Here, the dome 56 is formed at the second housing part 16, which can be a removable cover. The dome 56 extends towards the inside of the inner filter element 30. The dome 56 extends into the protrusion 54 of the inner filter element 30. More particularly, as the protrusion 54 protrudes into the central tube 48, the dome 56, the protrusion 54 and the central tube 48 overlap each other along the longitudinal axis 28.

### Reference Numbers

Gas filter system **10**
Housing **12**
First housing part **14**
Second housing part **16**
Inlet **18**
Outlet **19**
Outer filter element **20**
First filter medium **22**
First end cap **24**
Second end cap **26**
Longitudinal axis **28**
Inner filter element **30**
Second filter medium **32**
Third end cap **34**
Fourth end cap **36**
Clean side **40**
First sealing section **42**
Rib **44**
Second sealing section **46**
Central tube **48**
Collar **50**
Third sealing section **52**
Protrusion **54**
Dome **56**

## Claims

1. Gas filter system (10) comprising
- an outer filter element (20) having a first filter medium (22) arranged between a first end cap (24) and a second end cap (26); and
- an inner filter element (30) having a second filter medium (32) arranged between a third end cap (34) and a fourth end cap (36);
the first, second and third end caps (24, 26, 34) being open;
the inner filter element (30) being closed at the fourth end cap (36);
the first filter medium (22) being arrangeable to surround the second filter medium (32), such that the first end cap (24) of the outer filter element (20) surrounds the third end cap (34) of the inner filter element (30), the first and third end caps (24, 34) being sealed against each other, and such that the second end cap (26) of the outer filter element (20) surrounds the fourth end cap (34) of the inner filter element (30), the second and fourth end caps (26, 36) being sealed against each other, wherein the inner filter element (30) has an axial protrusion (54) at the fourth end cap (36), which protrusion (54) protrudes into the inner filter element (30) and the Gas filter system (10) further comprising a housing (12), in which the outer and inner filter elements (20, 30) are arrangeable, wherein the housing (12) has a central tube (48), which extends into the inner filter element (30) at the third end cap (34), and wherein the housing (12) has a dome (56), which protrudes into the protrusion (54) at the fourth end cap (36).

2. Gas filter system (10) according to claim 1, wherein the fourth end cap (34) is a monolithic closed end cap.

3. Gas filter system (10) according to any one of the preceding claims, wherein the first end cap (24) of the outer filter element (20) has a first sealing section (42) for sealing abutment against a housing (12), preferably in the radial direction.

4. Gas filter system (10) according to any one of the preceding claims, wherein the first end cap (24) of the outer filter element (20) has a second sealing section (46) for sealing abutment against the third end cap (34) of the inner filter element (30), preferably in the radial direction.

5. Gas filter system (10) according to claims 3 and 4, wherein the first end cap (24) is a monolithic foam part.

6. Gas filter system (10) according to any one of the preceding claims, wherein the second end cap (26) of the outer filter element (20) has a third sealing section (52) for sealing abutment against the fourth end cap (34) of the inner filter element (30), preferably in the radial direction.

7. Gas filter system (10) according to claims 1, wherein the protrusion (54) and the central tube (48) overlap each other in the axial direction.

8. Gas filter system (10) according to claim 7, wherein the dome (56) and the central tube (48) overlap each other in the axial direction.

9. Gas filter system (10) according to any one of the preceding claims, wherein the first or the second filter medium (22, 32), in particular the second filter medium (32) of the inner filter element (30), has gas-adsorbing properties and preferably contains activated carbon.

10. Gas filter system (10) according to one of the preceding claims, wherein the first or the second filter medium (22, 32), in particular the first filter medium (22) of the outer filter element (20), is made with cellulose.

11. Use of an outer filter element (20) and/or an inner filter element (30) in a gas filter system (10) according to one of the preceding claims.

## Patentansprüche

1. Gasfiltersystem (10) umfassend
- ein äußeres Filterelement (20) mit einem ersten Filtermedium (22), das zwischen einer ersten Endkappe (24) und einer zweiten Endkappe (26) angeordnet ist; und
- ein inneres Filterelement (30) mit einem zweiten Filtermedium (32), das zwischen einer dritten Endkappe (34) und einer vierten Endkappe (36) angeordnet ist;
wobei die erste, zweite und dritte Endkappe (24, 26, 34) offen sind;
wobei das innere Filterelement (30) an der vierten Endkappe (36) geschlossen ist;
wobei das erste Filtermedium (22) so angeordnet werden kann, dass es das zweite Filtermedium (32) umgibt, so dass die erste Endkappe (24) des äußeren Filterelements (20) die dritte Endkappe (34) des inneren Filterelements (30) umgibt, wobei die erste und dritte Endkappe (24, 34) gegeneinander abgedichtet sind, und so die zweite Endkappe (26) des äußeren Filterelements (20) die vierte Endkappe (34) des inneren Filterelements (30) umgibt, wobei die zweite und vierte Endkappe (26, 36) gegeneinander abgedichtet sind, wobei das innere Filterelement (30) einen axialen Vorsprung (54) an der vierten Endkappe (34) hat, wobei der Vorsprung (54) in das innere Filterelement (30) ragt und das Gasfiltersystem (10) weiterhin ein Gehäuse (12) umfasst, in dem das äußere und innere Filterelement (20, 30) angeordnet werden können, wobei das Gehäuse (12) ein Mittelrohr (48) hat, das sich in das innere Filterelement (30) an der dritten Endkappe (34) erstreckt, und wobei das Gehäuse (12) eine Wölbung (56) hat, die in den Vorsprung (54) an der vierten Endkappe (36) ragt.

2. Gasfiltersystem (10) nach Anspruch 1, wobei die vierte Endkappe (34) eine monolithische geschlossene Endkappe ist.

3. Gasfiltersystem (10) nach einem der obigen Ansprüche, wobei die erste Endkappe (24) des äußeren Filterelements (20) einen ersten Dichtungsabschnitt (42) zum dichtenden Anliegen an einem Gehäuse (12), vorzugsweise in Radialrichtung, hat.

4. Gasfiltersystem (10) nach einem der obigen Ansprüche, wobei die erste Endkappe (24) des äußeren Filterelements (20) einen zweiten Dichtungsabschnitt (46) zum dichtenden Anliegen an die dritte Endkappe (34) des inneren Filterelements (30), vorzugsweise in Radialrichtung, hat.

5. Gasfiltersystem (10) nach den Ansprüchen 3 und 4, wobei die erste Endkappe (24) ein monolithisches Schaumteil ist.

6. Gasfiltersystem (10) nach einem der obigen Ansprüche, wobei die zweite Endkappe (26) des äußeren Filterelements (20) einen dritten Dichtungsabschnitt (52) zum dichtenden Anliegen an die vierte Endkappe (34) des inneren Filterelements (30), vorzugsweise in Radialrichtung, hat.

7. Gasfiltersystem (10) nach Anspruch 1, wobei der Vorsprung (54) und das Mittelrohr (48) einander in Axialrichtung überlappen.

8. Gasfiltersystem (10) nach Anspruch 7, wobei die Wölbung (56) und das Mittelrohr (48) einander in Axialrichtung überlappen.

9. Gasfiltersystem (10) nach einem der obigen Ansprüche, wobei das erste oder das zweite Filtermedium (22, 32), insbesondere das zweite Filtermedium (32) des inneren Filterelements (30), gasadsorbierende Eigenschaften und vorzugsweise Aktivkohle hat.

10. Gasfiltersystem (10) nach einem der obigen Ansprüche, wobei das erste oder das zweite Filtermedium (22, 32), insbesondere das erste Filtermedium (22) des äußeren Filterelements (20), aus Zellulose besteht.

11. Verwendung eines äußeren Filterelements (20) und/oder eines inneren Filterelements (30) in einem Gasfiltersystem (10) nach einem der vorigen Ansprüche.

## Revendications

1. Système de filtration des gaz (10) comprenant
- un élément filtrant extérieur (20) ayant un premier milieu filtrant (22) disposé entre un premier bouchon d'extrémité (24) et un deuxième bouchon d'extrémité (26); et
- un élément filtrant intérieur (30) ayant un deuxième milieu filtrant (32) disposé entre un troisième bouchon d'extrémité (34) et un quatrième bouchon d'extrémité (36);
dans lequel les premier, deuxième et troisième bouchons d'extrémité (24, 26, 34) sont ouverts;
dans lequel l'élément filtrant intérieur (30) est fermé au niveau du quatrième bouchon d'extrémité (36);
dans lequel le premier milieu filtrant (22) peut être disposé pour entourer le deuxième milieu filtrant (32) de sorte que le premier bouchon d'extrémité (24) de l'élément filtrant extérieur (20) entoure le troisième bouchon d'extrémité (34) de l'élément filtrant intérieur (30), dans lequel les premier et troisième bouchons d'extrémité (24, 34) sont étanches l'un par rapport à l'autre de sorte que le deuxième bouchon d'extrémité (26) de l'élément filtrant extérieur (20) entoure le quatrième bouchon d'extrémité (34) de l'élément filtrant intérieur (30), dans lequel les deuxième et quatrième bouchons d'extrémité (26, 36) sont étanches l'un par rapport à l'autre, dans lequel l'élément filtrant intérieur (30) a une saillie axiale (54) au niveau du quatrième bouchon d'extrémité (36), laquelle saillie (54) fait saillie dans l'élément filtrant intérieur (30) et le système de filtration des gaz (10) comprend en outre un boîtier (12) dans lequel les éléments filtrants extérieurs et intérieurs (20, 30) peuvent être disposés, dans lequel le boîtier (12) a un tube central (48) s'étendant dans l'élément filtrant intérieur (30) au niveau du troisième bouchon d'extrémité (34), et dans lequel le boîtier (12) a un dôme (56) faisant saillie dans la saillie (54) au niveau du quatrième bouchon d'extrémité (36).

2. Système de filtration des gaz (10) selon la revendication 1, dans lequel le quatrième bouchon d'extrémité (34) est un bouchon d'extrémité fermé monolithique.

3. Système de filtration des gaz (10) selon l'une quelconque des revendications précédentes, dans lequel le premier bouchon d'extrémité (24) de l'élément filtrant extérieur (20) a une première section d'étanchéité (42) pour une butée d'étanchéité contre un boîtier (12), de préférence en direction radiale.

4. Système de filtration des gaz (10) selon l'une quelconque des revendications précédentes, dans lequel le premier bouchon d'extrémité (24) de l'élément filtrant extérieur (20) a une deuxième section d'étanchéité (46) pour une butée d'étanchéité contre le troisième bouchon d'extrémité (34) de l'élément filtrant intérieur (30), de préférence en direction radiale.

5. Système de filtration des gaz (10) selon les revendications 3 et **4,** dans lequel le premier bouchon d'extrémité (24) est un élément monolithique en mousse.

6. Système de filtration des gaz (10) selon l'une quelconque des revendications précédentes, dans lequel le deuxième bouchon d'extrémité (26) de l'élément filtrant extérieur (20) a une troisième section d'étanchéité (52) pour une butée d'étanchéité contre le quatrième bouchon d'extrémité (34) de l'élément filtrant intérieur (30), de préférence en direction radiale.

7. Système de filtration des gaz (10) selon la revendication 1, dans lequel la saillie (54) et le tube central (48) se chevauchent en direction axiale.

8. Système de filtration des gaz (10) selon la revendication 7, dans lequel le dôme (56) et le tube central (48) se chevauchent en direction axiale.

9. Système de filtration des gaz (10) selon l'une quelconque des revendications précédentes, dans lequel le premier ou le deuxième milieu filtrant (22, 32), notamment le deuxième milieu filtrant (32) de l'élément filtrant intérieur (30), a des propriétés d'adsorption des gaz et contient de préférence du charbon actif.

10. Système de filtration des gaz (10) selon l'une quelconque des revendications précédentes, dans lequel le premier ou le deuxième milieu filtrant (22, 32), notamment le premier milieu filtrant (22) de l'élément filtrant extérieur (20), est fait de cellulose.

11. Utilisation d'un élément filtrant extérieur (20) et/ou d'un élément filtrant intérieur (30) dans un système de filtration des gaz (10) selon l'une quelconque des revendications précédentes.
